# EUROPEAN PATENT APPLICATION

(11) **EP 0 845 827 A2**
(43) Date of publication of application: **03.06.1998**
(21) Application number: 97119434.5
(22) Date of filing: 14.08.1991
(51) Int. Cl.: H01M 6/00

(54) **Substantially mercury-free electrochemical cells**

(30) Priority: 14.08.1990 US 566925
(62) Divisional of application: 91307508.1
(71) Applicant: EVEREADY BATTERY COMPANY, INC., St. Louis Missouri 63164 (US)
(72) Inventor: Getz, Dale R., North Ridgeville, Ohio 44039 (US); Nardi, John C., Brunswick, Ohio 44212 (US); Scarr, Robert F., Westlake, Ohio 44145 (US)
(74) Representative: Lord, Hilton David

(57) **Abstract**

The present invention relates to alkaline electrochemical cells having a zinc-containing anode and an alkaline elctrolyte, the cell containing substantially no mercury, wherein, under conditions of normal use and storage, there is insufficient internal pressure build-up to cause rupture and/or leakage of the cell components, such cells not causing pollution on disposal.

## Description

The present invention relates to electrochemical cells that are substantially free of mercury.

Alkaline electrochemical cells typically contain an alkaline electrolyte, such as potassium hydroxide (KOH), a cathode comprising a metal oxide, such as manganese dioxide (MnO₂), and a zinc anode. Such cells provide excellent performance and are used throughout the world in many consumer applications.

A detrimental characteristic of these alkaline cells is the formation of hydrogen gas, which can be formed by undesirable corrosion of the zinc. The more gas that is generated, the higher the internal pressure in the cell becomes. If this pressure increase is not ultimately relieved, the cells can eventually leak.

A widely used solution to the corrosion of the zinc is the addition of mercury to the anode as a corrosion inhibitor. Mercury effectively inhibits the corrosion of zinc and the concomitant formation of gas, thus enhancing the performance of the electrochemical cell. Unfortunately, as is well known, mercury is detrimental to both health and the environment.

Accordingly, various endeavours have been made to reduce the amount of mercury used in the cell, typically by adding other zinc corrosion inhibitors. Examples of other inhibitors include lead, indium, cadmium, thallium, gold, silver, tin, gallium and substances incorporating these elements.

These inhibitors, which are intended to reduce the amount of mercury required in the cell, or to eliminate it altogether, may be, for example, alloyed with the zinc, deposited on the zinc, incorporated in the electrolyte and/or deposited on the collector.

Organic inhibitors, such as polyethylene glycol, have also been tried.

These methods have led to the commercialisation of low mercury content batteries" that have about 250 parts of mercury per million, based on total battery weight.

Unfortunately, the inhibitor methods employed do not reliably permit total removal of mercury from the cell. For example, indium is an effective inhibitor at higher levels of mercury but, surprisingly, at lower levels of mercury, indium is not as effective. Also, indium has little inhibitory effect in undischarged cells.

The organic inhibitors are effective for cells that are undischarged and stored, but they do not inhibit gassing for cells that are partially discharged before storage.

In view of these disadvantages, it has not been possible to commercialise a mercury-free, alkaline electrochemical cell which is both leak-proof and competitive with existing cells, despite the need for such a cell.

Thus, in a first aspect, the present invention provides an alkaline electrochemical cell having a zinc-containing anode and an alkaline elctrolyte, the cell containing substantially no mercury, characterised in that, under conditions of normal use and storage, there is insufficient internal pressure build-up to cause rupture and/or leakage of the cell components.

By "normal use and storage" is meant use and storage which such cells could reasonably be expected to have to endure. Such situations are commonly set out on the packaging of batteries, and typically include such conditions as not exposing to undue heat, and other abuse conditions recognised in the art and by responsible battery users.

The cells preferably further include at least one inhibitor of zinc corrosion, preferably wherein the inhibitor is indium or a compound thereof, a substituted or unsubstituted ethylene oxide polymer, a glycol substituted with 1-3 C₁₋₄-alkyl groups, or a combination of any or all of the foregoing, especially wherein the inhibitor is incorporated into the anode material.

Particularly preferred are cells wherein the ethylene oxide polymer is methoxylated polyethylene oxide, and/or the indium compound is indium hydroxide, the ethylene oxide polymer preferably having an average molecular weight ranging from about 300 to about 700, especially when the ethylene oxide polymer is used at between about 0.001 mg to about 0.1 mg per gram of zinc, and the indium-containing compound is used at 0.01 mg to about 1 mg per gram of zinc, the ethylene oxide polymer preferably being methoxylated polyethylene oxide.

Also preferred are cells which comprise a burnished brass anode current collector, preferably wherein the brass contains a non-uniform dispersion of lead in low concentrations.

In an alternative aspect, the present invention provides an electrochemical cell that is substantially free of mercury, comprising an alkaline electrolyte, a cathode comprising a metal oxide as the active cathode component, and an anode comprised of zinc as the active anode component, wherein the components are arranged in a sealed container in a manner effective to provide electrochemical energy; and wherein after the cell is partially discharged through an electrical resistor to about 1.2 volts, the cell does not exhibit leakage of the cell components when stored under storage conditions of 21°C for ninety days.

The electrochemical cell preferably contains less than 50 parts of mercury per million parts by weight of the cell and, more preferably, there is no mercury added to the components of the cell. It is preferred that the cell contains less than 10 parts of mercury per million parts by weight of the cell, especially less than 2 parts and, particularly, less than 1 part of mercury per million parts by weight of the cell.

The anode preferably further comprises an ethylene oxide polymer and an indium-containing compound, and the zinc is preferably low expansion zinc. When the ethylene oxide polymer is methoxylated polyethylene oxide, and the indium-containing compound is indium hydroxide, this is particularly preferred.

The ethylene oxide polymer preferably has an average molecular weight ranging from about 300 to about 700, and the indium-containing compound is soluble in the alkaline electrolyte.

The ethylene oxide polymer is preferably used at between about 0.001 mg to about 0.1 mg per gram of zinc, and the indium-containing compound is used at 0.01 mg to about 1 mg per gram of zinc.

Most preferred is that the ethylene oxide polymer is methoxylated polyethylene oxide and the indium-containing compound is indium hydroxide.

Conditions as specified above wherein the cells of the invention do not leak are: wherein the cell is discharged to 0.8 volts; wherein the storage conditions are 45°C for thirty days; wherein the storage conditions are 71°C for three days; wherein the storage conditions are 71°C for seven days; and especially wherein said resistor is a 20.0Ω resistor; wherein said cell is a D-size cylindrical cell and said resistor is a 2.2Ω resistor; wherein said cell is a C-size cylindrical cell and said resistor is a 3.9Ω resistor; wherein said cell is a AA-size cylindrical cell and said resistor is a 3.9Ω resistor; wherein said cell is a AAA-size cylindrical cell and said resistor is a 5.0Ω resistor; and, wherein said cell is a AAAA-size cylindrical cell and said resistor is a 20.0Ω resistor.

There is also provided an electrochemical cell that is substantially free of mercury, comprising an alkaline electrolyte, a cathode and an anode arranged in a sealed container in a manner effective to produce electrochemical energy, wherein the anode is comprised of low expansion zinc as the active anode material.

The above cells preferably have an anode gel which expands less than 40% after being discharged for 161 minutes to 15% depth of discharge at 2.88 A, but more preferably where the anode gel expands less than 20%, especially less than 15%.

The cells of the invention preferably have a void volume of between about 6% and about 12% of the cell's internal volume.

The present invention further provides an electrochemical cell that is substantially free of mercury, comprising an alkaline electrolyte, a cathode and an anode arranged in a sealed container in a manner effective to provide electrochemical energy, wherein the anode comprises low expansion zinc as the active anode material, and an ethylene oxide polymer.

In the above cells, it is preferred to provide a burnished brass anode current collector.

The void volume of the cells is preferably between about 6% and about 12% of the cell's internal volume.

In a preferred embodiment, the cell has a cathode comprising electrolytic manganese dioxide and synthetic graphite; an anode gel comprising low expansion zinc, between about 0.01 mg to about 1 mg per gram of zinc of indium hydroxide, and between about 0.001 mg to about 0.1 mg per gram of zinc of methoxylated polyethylene oxide polymer having an average molecular weight ranging from about 300 to about 700; and a burnished brass anode current collector; wherein the components are arranged in a sealed container in a manner effective to provide electrochemical energy, and such that the cell has a void volume of between about 6% and about 12% of the cell's internal volume.

The present invention provides an electrochemical cell that is substantially free of mercury. The cell comprises an alkaline electrolyte, a cathode comprising a metal oxide as the active cathode component, and an anode comprised of zinc as the active anode component. The cell components are arranged in a sealed container in a manner effective to provide electrochemical energy. The cells do not exhibit leakage of the cell components after being partially discharged via an electrical resistor to about 1.2 volts, and then stored under storage conditions of 21°C for ninety days.

In another aspect, the present invention provides an electrochemical cell that has less than two parts of mercury based on one million parts by weight of the cell. The cell is comprised of potassium hydroxide electrolyte solution; a cathode comprising electrolytic manganese dioxide and synthetic graphite; an anode gel comprising low expansion zinc, between about 0.01 mg to about 1 mg per gram of zinc of indium hydroxide, and between about 0.001 mg to about 0.1 mg per gram of zinc of methoxylated polyethylene oxide having an average molecular weight ranging from about 300 to about 700. The cell further employs a burnished brass anode current collector. The cell components are arranged in a sealed container in a manner effective to provide electrochemical energy, and such that the cell has a void volume of between about 6% and about 12% of the cell's internal volume.

In yet another aspect, the present invention provides an electrochemical cell that is substantially free of mercury. The cell comprises an alkaline electrolyte, a cathode and an anode arranged in a sealed container in a manner effective to provide electrochemical energy, wherein the anode comprises low expansion zinc as the active anode material.

In still yet another aspect, the present invention provides an electrochemical cell that is substantially free of mercury. The cell comprises an alkaline electrolyte, a cathode and an anode arranged in a sealed container in a manner effective to provide electrochemical energy, wherein the anode is a gel comprised of zinc as the active anode material, an indium-containing compound and an ethylene oxide polymer.

The alkaline electrochemical cells of the present invention are substantially free of mercury and, under conditions of normal usage and storage, do not usually leak, and can provide an effective amount of electrochemical energy so as to be useful as batteries.

The electrochemical cells of the present invention are substantially free of mercury. By the term "substantially free" is meant that little or no toxic mercurial waste or amalgam occurs on disposal of the cell. Typically, the cells of the present invention have less than 50 parts of mercury per million parts by total weight of the cell. Preferably, the mercury is present at less than 25 parts per million.

It is an advantage of the present invention that the cells of the invention may be manufactured without there being any requirement to add mercury to any component of the cell, but still obtain a competitive product. Such cells are also referred to herein as "zero-added mercury" cells.

It will be appreciated that a residual amount of mercury may be present in many natural products. Thus, the preferred cells of the invention have only that mercury present which results from the residual amount of mercury naturally present in the cell components. Thus, when the cells are disposed of, no amount of mercury is added to the environment that is greater than the amount that was present before the cell was assembled.

For example, commercially available "pure zinc" can contain about 20 parts of mercury per billion parts by weight of zinc, and often contains much less than 20 parts per billion.

For the zero-added mercury cells of the present invention, the amount of mercury present will preferably be less than the level that can be detected analytically. Typically, the amount will be less than 10 parts per million by total weight of the cell, preferably less than 5 parts per million, more preferably less than 2 parts per million, and most preferably less than 1 part per million.

The electrochemical cells of the present invention comprise an alkaline electrolyte, a cathode and an anode arranged in a sealed container in a manner effective to provide electrochemical energy, that is, when the cell is placed in a circuit, electrochemical energy is provided to the circuit. The cells have terminals of opposite polarity. One terminal is in contact with the cathode and the other is in contact with the anode. The cell is sealed in a manner effective to contain the cell components in the container under conditions of transport and use. The cell construction can include a cupped metallic can, suitably constructed of steel, nickel or other metal and can be nickel plated in whole or in part. A tubular cathode containing the active cathode material and conductor can be lined on the inner surface of the can, and a separator suitably made of a non-woven cellulosic or polymer fibre can be lined on the inner surface of the tubular cathode. In this construction, the can is in contact with the cathode and, thus, is the cathode terminal.

An anode made of a mixture of active anode material, electrolyte, optionally an electrolyte-swellable binder, such as a polyacrylic acid, for example Carbopol 940 (Trade Mark), can be enclosed within the separator. An anode current collector, such as in the form of a pin, is inserted into the anode. The cell is closed with a cover and sealed. The cover is in contact with the anode current collector and is the anode terminal of the cell.

Any conventional seal can be employed. It is preferred that the cell construction not have a venting means that would vent due to the normal pressure generated in the cell during a normal discharge.

The electrolyte used in the present invention provides an aqueous alkaline solution, such as potassium hydroxide or sodium hydroxide. The concentration of the solution may be any concentration that provides for ionic conductivity. Typically preferred, in the assembled cell, are concentrations ranging from about 30% to about 40%.

The cathode used in the present invention comprises a metal oxide as the active cathode component. Suitable examples include manganese dioxide and silver oxide. Preferred is manganese dioxide, and more preferred is electrolytic manganese dioxide (EMD). EMD, a widely available commercial product, is prepared by plating manganese dioxide from a manganese sulphate plating solution onto an electrode. The deposited manganese dioxide is subsequently removed from the electrode and recovered. One source is TOSOH Corporation, a Japanese company.

In addition to the metal oxide, the cathode further comprises a compound that is ionically conductive, a conductor. Of the many known types of conductor, synthetic graphite is preferably used in the cells of the present invention. Synthetic graphite is readily commercially available, such as from Lonza Ltd., a Swiss company.

The cathode may further comprise a binder. Examples of suitable binders include polytetrafluoroethylene and polyethylene.

The cathodes typically comprise a major amount of the metal oxide, a conductive amount of the graphite and often an effective amount of binder. Usually, the metal oxide forms between about 80 and 85 weight percent of the total cathode weight. When a binder is employed, the binder will usually comprise less than about 0.5% by weight, the remainder of the cathode comprising graphite and electrolyte solution. The amount of the electrolyte solution should be sufficient to wet the dry components, and to provide a mixture that can be moulded. The cathodes are prepared by mixing the components together and dispensing the mix into the container. The mix is then moulded or compressed against the inside of the container.

Zinc is used as the active anode material in the cells of the present invention. Preferably, the zinc is low expansion zinc, and is in powder form. The powdered zinc is combined with a binder, an amount of electrolyte solution to form a gel, and any other optional components.

Typically, anode gel expands when it is discharged and then stored. The expansion rate due to gassing of fresh or discharged mixes of gelled zinc powder can be measured by the change in volume of the mix after being stored at expansion conditions. Suitable conditions are, for example, storing for 24 hours at 71°C.

The expansion behaviour of zinc is dependent on rate and current density. These conditions in turn depend on the amount of the anode mix and the dimensions and geometry of the cell. The term "low expansion", as used herein, is a relative term, and is determined by comparing the amount of expansion of different types of zinc anode gel mixes, and it is preferred to use zinc to prepare the anode gel which expands least under expansion conditions as described. Zinc which forms low expansion gels also tends to provide a lower gassing cell and, thus, in the present invention. The term "low expansion zinc" should be construed accordingly.

The degree of expansion of zinc anode gels can be measured by preparing an anode gel, assembling and discharging a cell. An amount of the gel may then be removed from the cell, placed in a container and stored. After storing, the amount of expansion is measured and compared to the amount of expansion of undischarged gel stored under the same conditions.

The low expansion zincs useful in the cells of the present invention typically exhibit a specific relative volume expansion rate (SRVER), or % increase in volume after storage after partial discharge at 71°C, of less than 40%, preferably less than 25%, and more preferably less than 15%.

Another parameter that has been found to be useful in identifying zinc for cells of the present invention is the amount of iron in the zinc. Advantageously, the zinc has less than 10 parts of iron per million parts by weight of zinc. Preferably, the zinc contains less than 5 ppm of iron. More preferred is zinc that contains less than 3 ppm of iron.

The cells of the present invention preferably employ additives that inhibit the corrosion of zinc. One beneficial component to be added to the cell to inhibit the corrosion of zinc is an ethylene oxide polymer and derivatives thereof.

The ethylene oxide polymers comprise ethylene oxide moieties and can be substituted with organic and inorganic moieties. Suitable polymers include phosphate esters of ethylene oxide polymers, such as those disclosed in US-A-4,195,120; perfluorinated organic compounds of the ethoxylated fluoroalcohol type, such as those disclosed in US-A-4,606,984; and alkyl and polyethoxylalcohol sulphides, such as those disclosed in US-A-4,781,999.

Preferred polymers for use in the present invention are di- and triethylene glycol, polyethylene glycols having an average molecular weight range of about 190 to about 7000, and their mono- and diethers and esters. Suitable ethers and esters of polyethylene glycols are the C4 and lower alkyl ethers and C4 and lower alkanoate esters. Examples of ether derivatives include methoxy diethylene glycol and the methoxy and ethoxy polyethylene glycols. Examples of ester derivatives include polyethylene glycol acetate.

The preferred ethylene oxide polymers are the polyethylene glycols and methoxy polyethylene glycols having molecular weights averaging from about 300 to 700.

The ethylene oxide polymers can be used singly or in combination. They are generally soluble in water, and can be added as a water solution to the cell. The ethylene oxide polymer can be added directly to the zinc during the production of the anode gel. Alternatively, and/or additionally, the polymer additive can be included in water that is employed to pre-wet the separator in order to facilitate the wetting of the separator by the electrolyte. The polymer may then migrate to the zinc surface as the cell comes to equilibrium.

The inhibitor should be employed in the cell in an amount sufficient to inhibit the corrosion reaction between the zinc and the alkaline electrolyte. In general, beneficial effects are obtained with proportions of ethylene oxide polymer in excess of about 0.001 mg per gram of zinc, and preferably of about 0.01 mg per gram of zinc. Much larger proportions than these can be employed. For instance, amounts as large as 0.1 mg per gram of zinc have been employed and beneficial effects obtained. However, amounts of the ethylene oxide polymer greater than about 0.1 mg per gram of zinc are generally considered to be in excess.

Another component useful to inhibit zinc corrosion is an indium-containing compound. Suitable compounds include indium hydroxide, indium oxide and elemental indium. Preferably, the compounds are soluble in the electrolyte solution and, thus, indium hydroxide is preferred. The amount of indium employed should be, either alone or in combination with any other inhibitors, sufficient to inhibit the corrosion reaction between the zinc and alkaline electrolyte. This amount is preferably between about 0.001 and about 1 mg per gram of zinc and, more preferably, between about 0.05 and about 0.2 mg per gram of zinc.

The indium-containing compound may be added in any manner that will enable it to become associated with the zinc. Preferably it is added directly into the anode mix. Additionally, the indium-containing compound can be added to the electrolyte solution.

The anode is prepared by mixing the zinc powder, ethylene oxide polymer, optional binder and an amount of electrolyte effective to form a paste or gel. Advantageously, an indium-containing compound is also added. This paste or gel can then be injected into the container.

A burnished brass anode current collector is preferably employed in the cells of the present invention. This is inserted into the anode mix and is in contact with a terminal of the cell. By "burnishing" is meant that surface oxides and residual contaminants are substantially removed from the surface of the collector. A clean shiny surface results.

Burnishing may be accomplished by many means, for example, tumbling with ceramic balls. A preferred method is tumbling in the presence of a coating material that prevents oxidation of the burnished surface. Preferred coating materials are organic surfactants. A highly preferred example is polypropylene glycol.

The typical brass anode current collector has a composition of about 65% to 70% copper and about 30% to 35% zinc. The preferred anode current collector is made of a conductive alloy containing a discontinuous dispersion of a minor amount of lead. An example of such an alloy is a copper-zinc-lead alloy. The amount of lead dispersed in the anode current collector made of a copper-zinc-lead alloy should be preferably at least 200 parts per million based on the weight of the alloy of the current collector.

In a copper-zinc-lead alloy current collector, the copper provides conductivity for the current collector while the zinc is compatible with the zinc anode. Preferably, the copper should form at least 50 weight percent of the copper-zinc-lead alloy, with the remainder being substantially zinc and a minor amount of lead. A suitable copper-zinc-lead alloy for use as the anode current collector is copper alloy C33000 containing from 65 to 68 weight percent copper, 0.25 to 0.7 weight percent lead, and the remainder zinc. It is advantageous that the brass current collector be free of iron and nickel. Other suitable brass alloys used as current collectors are C26000 and C27000.

In addition to a copper-zinc-lead alloy, any conductive material compatible with the electrochemical system of the cell may be used as the alloy material of the anode current collector. Thus, the anode current collector could be a conductive alloy composed of copper, zinc or brass containing a dispersion of lead throughout the alloy, for example. A minor amount of cadmium in the anode current collector can also contribute to reduced gassing. The cadmium may be dispersed along with the lead throughout the anode current collector. The cadmium may be added in amount of at least 1000 parts per million based on the weight of the anode current collector. Preferably, the dispersed cadmium should be from 1500 parts per million to 2000 parts per million.

It is advantageous that space be left in the cell to accommodate any gas that is formed. This space, or void volume, will vary according to the cell size and amount of zinc employed. The larger the cell, generally, the larger the void volume. Typically, the cells of the present invention have a void volume of 6% to 12% of the cell's internal volume.

The substantially mercury-free, non-leaking cells of the present invention can be obtained in different ways with different combinations of the components. A preferred combination comprises the use of electrolytic manganese dioxide, synthetic graphite, low-iron or low expansion zinc, ethylene oxide polymer, indium-containing compound and burnished brass current collector. A slightly less preferred combination includes the same components except for the indium-containing compound. Consistently good results are obtained with different variations in type of zinc, anode collector, for example, when used in combination with both the ethylene oxide polymer and indium-containing compound.

The electrochemical cells of the present invention will typically have an initial voltage of about 1.58 as determined by the difference in potential between the zinc and the cathode. The cells exhibit no leakage of the cell components after discharging, through an electrical resistor, to 1.2 volts, and after being stored at 21°C for ninety days.

Preferably, the cells of the present invention exhibit no leakage after being discharged to 0.8 volts and then stored for the stated period.

The cells also tend to exhibit no leakage after being discharged through an electrical resistor to 1.2 volts and then stored at 45°C for thirty days, and preferably, or after being discharged to 0.8 volts and so stored. More preferably, the cells exhibit no leakage when discharged through an electrical resistor to 1.2 volts, and then stored at 71°C for three days, and most preferably, after being discharged to 0.8 volts and so stored. Most preferably, the cells exhibit no leakage when discharged through an electrical resistor to 1.2 volts, and then stored at 71°C for seven days and preferably, after being discharged to 0.8 volts and so stored.

Such discharge and storage conditions are representative of the actual use made of the cells or batteries. For example, the batteries can be used in a device, such as a radio. However, the battery is typically not fully discharged. The device and battery may then be put aside for a period before they are used again. The cells of the present invention exhibit no leakage when conventionally used and so stored.

The value of the electrical resistance can vary according to cell size. Typically, the cells of the present invention will exhibit no leakage when discharged through an electrical circuit that has an electrical resistance value of 20Ω or less depending on cell size.

For example, a conventional D-size cell or battery (2.406 inches [61.11 mm] high by 1.344 inches [34.14 mm] diameter) can be discharged to 1.2 volts through a 2.2Ω resistor and stored without showing leakage. A C-size (1.969 inches [50.01 mm] high by 1.031 inches [26.19 mm] diameter) or AA-size (1.988 inches [50.50 mm] high by 0.563 inch [14.30 mm] diameter) cell or battery can be discharged through a 3.9Ω resistor to 1.2 volts and stored without showing leakage. An AAA-size cell or battery (1.745 inches [44.32 mm] high by 0.41 inch [10.41 mm] diameter) can be discharged through a 5Ω resistor to 1.2 volts and then stored without showing leakage. An AAAA-size cell or battery (1.648 inches [41.86 mm] high by 0.310 inch [7.87 mm] diameter) can be discharged through a 20Ω resistor to 1.2 volts and then stored without showing leakage.

Under normal discharge conditions, hydrogen gas is formed and will cause the cells to bulge. If the cells bulge too much, they will leak. The actual amount of bulge that causes leakage will vary according to cell size. For C-size cells, a bulge of greater than 40 mils [1.016 mm] will often cause leakage. The cells of the present invention, regardless of size, generally exhibit a degree of bulge less than the amount that will typically cause leakage of the cell components.

By "leakage" of the cell components is meant that there is no leakage of the components attributable to undesirable gas formation. It is always possible to have leakage due to poor cell construction such as improper sealing of the cell. These improper and poor performing construction conditions are known. Also, "leakage" as used in this specification is different from creepage of the electrolyte. By nature, aqueous alkaline electrolyte solutions creep along the surface of metals. The amount of creepage in a normally constructed cell is small, and is not equivalent to the type of leakage of the components that occurs when an undesirable amount of gas is formed.

The cells of the present invention also exhibit an effective amount of performance. For example, C-size cells made according to the claimed invention and which contain 23.4 g of MnO₂ and 9.1 g of Zn provided 45 to 50 hours of usable service when discharged through a 10Ω resistor for four hours per day.

The following Examples further illustrate the present invention.

### EXAMPLES

### Example 1

Several C-size cells are constructed, discharged and stored at different temperatures for different periods. The cells have no mercury added to them, and use pure zinc as the active anode material, electrolytic manganese dioxide as the active cathode material and potassium hydroxide as the electrolyte. The anode contains 0.01 mg methoxylated polyethylene oxide (Carbowax 550 - Trade Mark) per gram of zinc and 0.02 mg of indium hydroxide per gram of zinc. The zinc is 6.2% SRVER expansion zinc, and contains 5.1 ppm of iron. The anode formulation is:

| Component | Weight % |
|---|---|
| Zinc | 63% |
| KOH | 36% |
| Carbopol™ C940 (Binder) | 0.6% |
| Carbowax™ 550 | 0.01 mg/gm Zn |
| Indium Hydroxide | 0.02 mg/gm Zn |

Trace amounts of zinc oxide and sodium silicate are added to yield 100 weight percent. These are used for their conventional purposes. The total anode weight is 14.43 grams and the amount of zinc in the anode is 9.1 grams.

The cathode formulation is:

| Component | Weight Percent |
|---|---|
| MnO₂ (electrolytic) | 80% |
| Synthetic Graphite | 10.5% |
| Polytetrafluoroethylene (Binder) | 0.3% |
| KOH | 9.2% |
| | $\overline{\text{100.0%}}$ |

The total cathode weight is 29.2 grams and the amount of manganese dioxide is 23.4 grams.

Additional potassium hydroxide in the form of a 45% solution in water is added to the cell to provide a total electrolyte weight of 11.53 grams, of which 4.2 grams is potassium hydroxide. The total volume of the anode, cathode and electrolyte is 16.6 cm³, and the void volume is between about 10% to 12% of the cell's internal volume. The components are placed in a nickel-plated steel container, a burnished brass anode current collector is used, and the cell is sealed.

Ten cells are discharged through a 3.9Ω resistor for about four hours to approximately 1.2 volts. The cells are then stored at 21°C for ninety days. None of the cells exhibit leakage of the components. The average bulge is 8 mils [0.203 mm], the maximum is 24 mils [0.610 mm], the minimum is 0 and the standard deviation of the sample is 6.4 mils [0.163 mm].

An additional four cells are discharged and stored under the same conditions. None of the cells exhibit leakage of the cell components. The average bulge is 8 mils [0.203 mm], the maximum is 14 mils [0.356 mm], the minimum is 5 mils [0.127 mm], and the standard deviation is 3.9 mils [0.099 mm].

An additional ten cells are discharged under the same conditions, but they are stored at 45°C for ninety days. None of the cells leak the cell components. The average bulge is 14 mils [0.356 mm], the maximum is 18 mils [0.457 mm], the minimum is 9 mils [0.229 mm] and the standard deviation is 2.6 mils [0.066 mm].

Four other cells are discharged and stored at 45°C for ninety days. None of the cells leak. The average bulge is 14 mils [0.356 mm], the maximum is 16 mils [0.406 mm], the minimum is 12 mils [0.305 mm] and the standard deviation is 1.9 mils [0.048 mm].

An additional ten cells are discharged under the same conditions, but they are stored at 71°C for 28 days. None of the cells leak. The average bulge is 12 mils [0.305 mm], the maximum is 21 mils [0.533 mm], the minimum is 8 mils [0.203 mm] and the standard deviation is 4.9 mils [0.124 mm].

Four more cells are discharged and stored at 71°C for 28 days. None of the cells leak. The average bulge is 14 mils [0.356 mm], the maximum is 23 mils [0.584 mm], the minimum is 10 [0.254 mm] and the standard deviation is 6.4 mils [0.163 mm].

This example shows the benefit of using low expansion zinc, the burnished brass current collector and the addition of both an ethylene oxide polymer and indium-containing compound in mercury-free cells. The cells can be partially discharged and stored under harsh conditions without leaking. The degree of bulging is very low. The cells of this Example exhibit bulging well below the 40 mil [1.016 mm] amount which often results in leakage.

### Example 2

Cells are prepared in the same manner with the same components as in Example 1, except that no indium hydroxide is added.

Ten of these cells are discharged through a 3.9Ω resistor for about four hours to approximately 1.2 volts. These are then stored at 21°C for ninety days. None of the cells leak. The average bulge is 11 mils [0.279 mm], the maximum is 17 mils [0.432 mm], the minimum is 8 mils [0.203 mm] and the standard deviation is 3.1 mils [0.079 mm].

Four more cells are discharged and stored under the same conditions. None of the cells leak. The average bulge is 13 mils [0.330 mm], the maximum bulge is 24 mils [0.610 mm], the minimum is 8 mils [0.203 mm] and the standard deviation is 7.5 mils [0.191 mm].

Ten other cells are discharged under the same conditions but are stored at 45°C for ninety days. None of the cells leak. The average bulge is 22 mils [0.559 mm], the maximum is 35 mils [0.889 mm], the minimum is 13 mils [0.330 mm] and the standard deviation is 8.8 mils [0.224 mm].

Four other cells are discharged and stored at 45°C for ninety days. None of the cells leak. The average bulge of the cells is 20 mils [0.508 mm], the maximum is 21 mils [0.533 mm], the minimum is 19 mils [0.483 mm] and the standard deviation is 1 mil [0.025 mm].

An additional ten cells are discharged under the same conditions but are stored at 71°C for 28 days. None of the cells leak. The average bulge of the cells is 18 mils [0.457 mm], the maximum is 29 mils [0.737 mm], the minimum is 7 mils [0.178 mm] and the standard deviation is 7.9 mils [0.201 mm].

Another four cells are discharged and stored at 71°C for 28 days. None of the cells leaked. The average bulge is 13 mils [0.330 mm], the maximum is 15 mils [0.381 mm], the minimum is 12 mils [0.305 mm] and the standard deviation is 1.5 mils [0.038 mm].

This example shows the benefits of using the low expansion zinc, burnished brass current collector and ethylene oxide polymer in mercury-free cells. By comparing the bulge data of this example with the bulge data of Example 1, the additional benefit of the presence of indium hydroxide is illustrated. The cells with both indium hydroxide and ethylene oxide polymer generally show a lower average bulge.

## Claims

1. An alkaline electrochemical cell having a zinc-containing anode and an alkaline elctrolyte, the cell containing substantially no mercury, characterised in that, under conditions of normal use and storage, there is insufficient internal pressure build-up to cause rupture and/or leakage of the cell components.

2. A cell according to claim 1, wherein the zinc of the anode is so selected that, under conditions of partial discharge and storage, an anode gel containing the zinc expands less than standard anode zinc, preferably wherein the anode gel expands less than 40% after being discharged for 161 minutes to 15% depth of discharge at 2.88 A, more preferably less than 20%, especially less than 15%.

3. A cell according to claim 2, wherein the conditions comprise: partially discharging the cell through an electrical resistor to about 1.2 volts, and storing under storage conditions of 21°C for ninety days.

4. A cell according to claim 2 or 3, wherein the conditions comprise: the cell being discharged to 0.8 volts; the storage conditions being 45°C for thirty days; the storage conditions being 71°C for three days; the storage conditions being 71°C for seven days; and especially the resistor being a 20.0Ω resistor; the cell being a D-size cylindrical cell and the resistor being a 2.2Ω resistor; the cell being a C-size cylindrical cell and the resistor being a 3.9Ω resistor; the cell being a AA-size cylindrical cell and the resistor being a 3.9Ω resistor; the cell being a AAA-size cylindrical cell and the resistor being a 5.0Ω resistor; and, the cell being a AAAA-size cylindrical cell and the resistor being a 20.0Ω resistor.

5. A cell according to any preceding claim, wherein the mercury content is less than 50 parts of mercury per million parts by weight of the cell, preferably less than 10 parts, especially less than 2 parts and, particularly, less than 1 part of mercury per million parts by weight of the cell.

6. A cell according to any preceding claim, wherein no mercury is added to the components of the cell.

7. A cell according to any preceding claim, wherein the cathode comprises synthetic graphite.

8. A cell according to any preceding claim, wherein the cell further comprises at least one inhibitor of zinc corrosion.

9. A cell according to claim 8, wherein the inhibitor is indium or a compound thereof, a substituted or unsubstituted ethylene oxide polymer, a glycol substituted with 1-3 C₁₋₄-alkyl groups, or a combination of any or all of the foregoing.

10. A cell according to claim 9, wherein the inhibitor is incorporated into the anode material.

11. A cell according to claim 9 or 10, wherein the ethylene oxide polymer is methoxylated polyethylene oxide, and/or the indium compound is indium hydroxide, the ethylene oxide polymer preferably having an average molecular weight ranging from about 300 to about 700, especially when the ethylene oxide polymer is used at between about 0.001 mg to about 0.1 mg per gram of zinc, and the indium-containing compound is used at 0.01 mg to about 1 mg per gram of zinc, the ethylene oxide polymer preferably being methoxylated polyethylene oxide.

12. A cell according to any preceding claim, having a void volume of between about 6% and about 12% of the cell's internal volume.

13. A cell according to any preceding claim, further comprising a burnished brass anode current collector, preferably wherein the brass contains a non-uniform dispersion of lead in low concentrations.

14. A cell according to any preceding claim, the cell having a cathode comprising electrolytic manganese dioxide and synthetic graphite; an anode gel comprising low expansion zinc, between about 0.01 mg to about 1 mg per gram of zinc of indium hydroxide, and between about 0.001 mg to about 0.1 mg per gram of zinc of methoxylated polyethylene oxide polymer having an average molecular weight ranging from about 300 to about 700; and a burnished brass anode current collector; wherein the components are arranged in a sealed container in a manner effective to provide electrochemical energy, and such that the cell has a void volume of between about 6% and about 12% of the cell's internal volume.

15. A cell according to any preceding claim, wherein said zinc comprises less than about 10 parts per million of iron, preferably less than about 5 and especially less than about 3 parts per million.
